# EUROPÄISCHE PATENTSCHRIFT

(11) **EP 1 917 156 B1**
(45) Veröffentlichungstag und Bekanntmachung des Hinweises auf die Patenterteilung: **19.10.2011**
(21) Anmeldenummer: 06762918.8
(22) Anmeldetag: 01.08.2006
(51) Int. Cl.: B60N 2/02

(54) **BEFESTIGUNGSVORRICHTUNG**
SECURING DEVICE
DISPOSITIF DE FIXATION

(30) Priorität: 26.08.2005 DE 102005040479
(43) Veröffentlichungstag der Anmeldung: 07.05.2008
(73) Patentinhaber: Daimler AG, 70327 Stuttgart (DE)
(72) Erfinder: BODIRSKY, Helmut, 89233 Neu-Ulm (DE); GARHOFER, Bernhard, 89079 Ulm (DE)
(74) Vertreter: JENSEN & SON
(86) Internationale Anmeldenummer: PCT/EP2006/007589
(87) Internationale Veröffentlichungsnummer: WO 2007/022853

(56) Entgegenhaltungen:
- EP-A1- 0 615 879
- EP-A2- 0 962 355
- FR-A1- 2 785 240
- JP-A- 10 194 017
- US-B1- 6 416 116

## Beschreibung

Die Erfindung betrifft eine Vorrichtung zum Befestigen von mindestens einer Haltestange an einem Fahrzeugdach, mit einer Befestigungsschiene, an der die Haltestange befestigbar ist, und mit einer Verkleidung.

Aus der europäischen Patentanmeldung EP 0 769 416 A1 ist eine Haltestange bekannt, die an einer Profilschiene befestigt ist, welche in einem Abstand etwa parallel zur Decke angeordnet ist und wenigstens an der der Decke abgewandten Seite eine T-förmige Nut aufweist. Die Haltestange ist mittels eines in der Nut angeordneten Gleitstücks an der Profilschiene befestigt. Aus der deutschen Offenlegungsschrift DE 100 51 967 A1 ist eine Anordnung zur verdrehsicheren Lagerung von Haltestangensystemen bekannt. Aus der deutschen Gebrauchsmusterschrift DE 299 13 289 U1 ist ein Haltestangensystem für öffentliche Verkehrsmittel bekannt, bei dem als Grundelement Strangpressprofile aus Aluminium vorgesehen sind. Aus der europäischen Patentschrift EP 0 352 216 B1 ist eine Anordnung zum Befestigen einer Haltestange bekannt.

Weiterer Stand der Technik ist den Dokumenten US 6 416 116 B, JP 10 194017 A sowie EP 0 962 355 A zu entnehmen.

Die US 6 416 116 B offenbart dabei eine gattungsbildende Vorrichtung nach dem Oberbegriff des Anspruchs 1.

Aufgabe der Erfindung ist es, eine Befestigungsvorrichtung gemäß dem Oberbegriff des Anspruchs 1, zur Befestigung der Haltestange, zu vereinfachen.

Die Aufgabe wird durch die Merkmale des Anspruchs 1 gelöst. Bei manchen herkömmlichen Befestigungsvorrichtungen ist die Schiene von der Verkleidung abgedeckt. Zur Montage der Haltestange muss die Verkleidung an der Befestigungsstelle aufgeschnitten werden. Durch eine erfindungsgemäße Spaltabdeckeinrichtung wird der Spalt vor und nach der Montage abgedeckt. Bei der Montage kann die Spaltabdeckreinrichtung auf einfache Art und Weise zum Beispiel durch Herausziehen, Umbiegen und/oder Ausschneiden an der jeweiligen Befestigungsstelle entfernt werden.

Die erfindungsgemäße Vorrichtung weist eine Spaltabdeckeinrichtung mit einer Abdecklippe auf, die den Montagezugangsspalt überbrückt. Es ist auch möglich, den Montagezugangsspalt durch zwei aneinander stoßende Abdecklippen zu verschließen. Das hat allerdings den Nachteil, dass die Stoßkante sichtbar ist. Durch die eine Abdecklippe kann der Montagezugangsspalt vollständig verschlossen werden.

Ferner ist bei der erfindungsgemäßen Vorrichtung die Abdecklippe auf der dem Fahrzeuginnenraum abgewandten Seite der Verkleidung angeordnet. Dadurch wird der Montagezugangsspalt sauber abgeschlossen, ohne dass der optische Eindruck der Verkleidung beeinträchtigt wird.

Ein weiteres bevorzugtes Ausführungsbeispiel der Vorrichtung ist **dadurch gekennzeichnet, dass** die Abdecklippe aus einem flexiblen Kunststoffmaterial gebildet ist. Die Abdecklippe ist zum Beispiel aus Ethylen-Propylen-Dien-Kautschuk gebildet.

Ein weiteres bevorzugtes Ausführungsbeispiel der Vorrichtung ist **dadurch gekennzeichnet, dass** die Abdecklippe von einem Klemmprofil ausgeht. Das Klemmprofil ermöglicht eine einfache Montage der Abdecklippe.

Ein weiteres bevorzugtes Ausführungsbeispiel der Vorrichtung ist **dadurch gekennzeichnet, dass** das Klemmprofil und die Abdecklippe aus einem Koextrusionsprofil gebildet sind. Dadurch werden die Herstellkosten gering gehalten.

Ein weiteres bevorzugtes Ausführungsbeispiel der Vorrichtung ist **dadurch gekennzeichnet, dass** das Klemmprofil an einem Schenkel eines Winkelprofils festgeklemmt ist. Das Winkelprofil ist vorzugsweise aus Stahlblech gebildet.

Ein weiteres bevorzugtes Ausführungsbeispiel der Vorrichtung ist **dadurch gekennzeichnet, dass** der andere Schenkel des Winkelprofils an der Befestigungsschiene befestigt ist. Der andere Schenkel des Winkelprofils kann zum Beispiel stoffschlüssig durch Schweißen, Löten oder Kleben mit der Befestigungsschiene verbunden sein. Der andere Schenkel des Winkelprofils kann aber auch mit Hilfe von Befestigungselementen, wie Nieten oder Schrauben, an der Befestigungsschiene befestigt sein.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

Dabei zeigen:
- Fig. 1: die Ansicht eines Schnitts durch eine erfindungsge- mäße Befestigungsvorrichtung;
- Fig. 2: eine Befestigungsvorrichtung aus Figur 1 allein im Querschnitt und
- Fig. 3: eine Abdeckeinrichtung aus Figur 1 allein im Quer- schnitt.

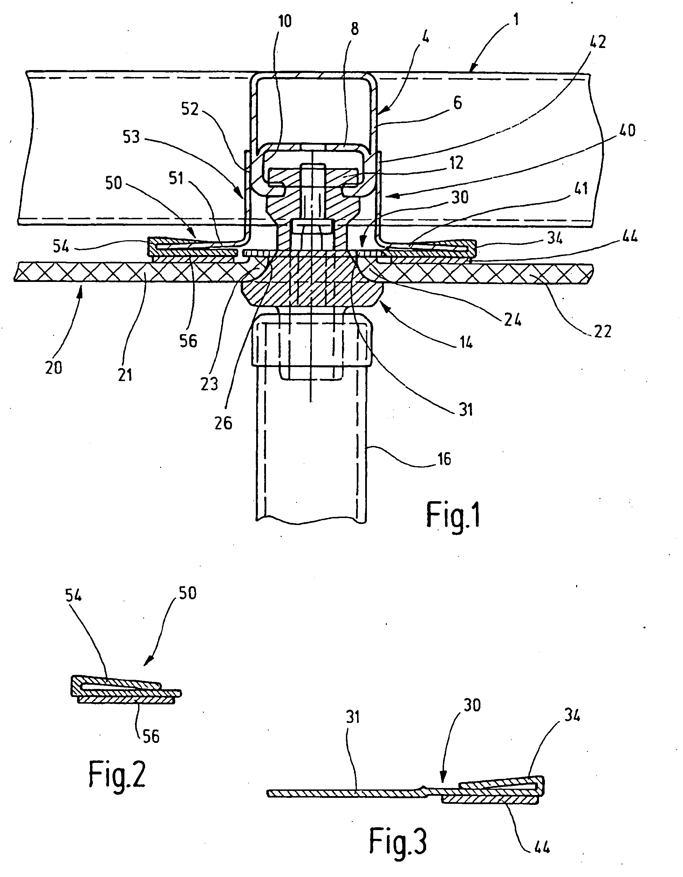

In Figur 1 ist eine Tragstruktur 1 eines Fahrzeugdachs angedeutet, an der eine Befestigungsschiene 4 befestigt ist. Die Befestigungsschiene 4 ist im Querschnitt dargestellt und umfasst ein Hohlprofil 6, das mit einem C-Profil 8 kombiniert ist. Das C-Profil 8 umfasst eine T-Nut 10, in der ein Kopf 12 eines Befestigungselements 14 befestigt ist. Das Befestigungselement 14 dient dazu, in bekannter Art und Weise ein Ende einer Haltestange 16 an der Befestigungsschiene 4 zu befestigen.

Die Tragstruktur 1 des Fahrzeugdachs ist zu einem Fahrzeuginnenraum hin durch eine Verkleidung abgedeckt, die mehrere Verkleidungsteile 21, 22 umfasst. Die Verkleidungsteile 21, 22 weisen im Bereich und entlang der Befestigungsschiene 4 jeweils einen nach oben gekrümmten Randbereich 23, 24 auf. Zwischen den Randbereichen 23, 24 der Verkleidungsteile 21, 22 ist ein Montagezugangsspalt 26 ausgespart, der entlang der Befestigungsschiene 4 verläuft. Der Montagezugangsspalt 26 ermöglicht auf einfache Art und Weise ein Einsetzen des Befestigungselements 14 vom Fahrzeuginnenraum in die T-Nut 10.

Der Montagezugangsspalt 26 ist durch eine Abdeckeinrichtung 30 verschlossen. Die Abdeckeinrichtung 30 umfasst eine Abdecklippe 31, die von einem Klemmprofil 34 ausgeht. Die Abdecklippe 31 ist aus einem flexiblen Kunststoffmaterial gebildet und überdeckt den Montagezugangsspalt 26 vollständig. Die Abdecklippe 31 ist etwas länger als der Montagezugangsspalt 26 und liegt an den Randbereichen 23, 24 der Verkleidungsteile 21, 22 auf. Das Klemmprofil 34 ist auf einen Schenkel 41 eines Winkelprofils 40 aufgeschoben, dessen anderer Schenkel 42 an der Befestigungsschiene 4 befestigt ist. An der Unterseite des Klemmprofils 34 ist ein Hakenband 44 angebracht, zum Beispiel angeklebt. Das Hakenband 44 dient dazu, das Verkleidungsteil 22 zum Beispiel mit Hilfe eines mit dem Hakenband 44 zusammenwirkenden Klettband, das an dem Verkleidungsteil 22 befestigt ist, an dem Klemmprofil 34 zu befestigen.

Das Verkleidungsteil 21 ist mit Hilfe einer Befestigungseinrichtung 50 an einem Schenkel 51 eines Winkelprofils 53 befestigt, dessen anderer Schenkel 52 an der Befestigungsschiene 4 befestigt ist. Die Befestigungseinrichtung 50 umfasst ein Klemmprofil 54, das auf den Schenkel 51 des Winkelprofils 53 aufgeschoben ist. An der Unterseite des Klemmprofils 54 ist ein Hakenband 56 befestigt. Das Hakenband 56 dient dazu, das Verkleidungsteil 21 mit Hilfe eines geeigneten Klettbands an dem Winkelprofil 53 zu befestigen.

In Figur 2 ist die Befestigungseinrichtung 50 allein im Querschnitt dargestellt.

In Figur 3 ist die Abdeckeinrichtung 30 allein im Querschnitt dargestellt.

In Figur 1 ist das Abdeckelement 30 in einem Zustand dargestellt, in dem die Abdecklippe 31 den Montagezugangsspalt 26 komplett überdeckt. In diesem Zustand wird die Befestigungsschiene 4 verdeckt, so dass sie vom Fahrzeuginnenraum her nicht sichtbar ist. Vor dem Anbringen des Befestigungselements 14 an der Befestigungsschiene 4 kann die Abdecklippe 31 durch den Montagezugangsspalt 26 herausgezogen und, zum Beispiel mit einer Stanzzange, bearbeitet werden. Des Weiteren können im herausgezogenen Zustand der Abdecklippe 31 Befestigungslager oder Distanzstücke an der Befestigungsschiene 4 montiert werden. Nach dem Bearbeiten und/oder Beschneiden der Abdecklippe 31 wird diese wieder hinter die Verkleidungsteile 21, 22 gedrückt, um die Befestigungsschiene 4 zu verdecken. Es ist auch möglich, die Abdecklippe 31 beim Anbringen des Befestigungselements 14 mit diesem wegzudrücken. Dann kann ein Bearbeiten der Abdecklippe 31 entfallen.

## Patentansprüche

1. Vorrichtung zum Befestigen von mindestens einer Haltestange (16) an einem Fahrzeugdach (1), mit einer Befestigungsschiene (4), an der die Haltestange (16) befestigbar ist, und mit einer Verkleidung (20), wobei die Verkleidung (20) einen Montagezugangsspalt (26) zur Befestigung der Haltestange (16) an der Befestigungsschiene (4) aufweist, der entlang der Befestigungsschiene (4) verläuft **dadurch gekennzeichnet, dass** der Montagezugangsspalt (26) durch eine Spaltabdeckeinrichtung (30) verschlossen ist, wobei die Spaltabdeckeinrichtung (30) eine Abdecklippe (31) aufweist, die den Montagezugangsspalt (26) überbrückt, und wobei
die Abdecklippe (31) auf der dem Fahrzeuginnenraum abgewandten Seite der Verkleidung (20) angeordnet ist.

2. Vorrichtung nach Anspruch 1,
**dadurch gekennzeichnet, dass**
die Abdecklippe (31) aus einem flexiblen Kunststoffmaterial gebildet ist.

3. Vorrichtung nach einem der Ansprüche 1 oder 2,
**dadurch gekennzeichnet, dass**
die Abdecklippe (31) von einem Klemmprofil (34) ausgeht.

4. Vorrichtung nach Anspruch 3,
**dadurch gekennzeichnet, dass**
das Klemmprofil (34) und die Abdecklippe (31) aus einem Koextrusionsprofil gebildet sind.

5. Vorrichtung nach Anspruch 3 oder 4,
**dadurch gekennzeichnet, dass**
das Klemmprofil (34) an einem Schenkel (41) eines Winkelprofils (40) festgeklemmt ist.

6. Vorrichtung nach Anspruch 5,
**dadurch gekennzeichnet, dass**
der andere Schenkel (42) des Winkelprofils (40) an der Befestigungsschiene (4) befestigt ist.

## Claims

1. Device for securing at least one support pole (16) to a vehicle roof (1), with a securing rail (4), to which the support pole (16) can be secured, and with a covering (20), wherein the covering (20) comprises an assembly access gap (26) for securing the support pole (16) to the securing rail (4), which assembly access gap (26) extends along the securing rail (4), **characterised in that** the assembly access gap (26) is closed by a gap covering element (30), wherein the gap covering element (30) comprises a covering lip (31) which bridges over the assembly access gap (26) and wherein the covering lip (31) is arranged on the side of the covering (20) facing away from the vehicle inner space.

2. Device according to claim 1,
**characterised in that**
the covering lip (31) is formed from a flexible plastic material.

3. Device according to one of the claims 1 or 2, **characterised in that**
the covering lip (31) goes from a clamping profile (34).

4. Device according to claim 3,
**characterised in that**
the clamping profile (34) and the covering lip (31) are formed from a co-extrusion profile.

5. Device according to claim 3 or 4,
**characterised in that**
the clamping profile (34) is clamped to a leg (41) of an angular profile (40).

6. Device according to claim 5,
**characterised in that**
the other leg (42) of the angular profile (40) is fixed to the securing rail (4).

## Revendications

1. Dispositif destiné à fixer au moins une barre de retenue (16) au toit (1) d'un véhicule, qui comporte un rail de fixation (4) auquel la barre de retenue (16) peut être fixée, et une garniture (20), ladite garniture (20) présentant une fente (26) d'accès et de montage en vue de la fixation de la barre de retenue (16) au rail de fixation (4), qui s'étend le long du rail de fixation (4) **caractérisé en ce que** la fente d'accès (26) et de montage est fermée par un dispositif de recouvrement de fente (30), ledit dispositif de recouvrement de fente (30) présentant une lèvre de recouvrement (31) qui recouvre la fente d'accès et de montage (26), et ladite lèvre de recouvrement (31) étant disposée sur le côté de la garniture (20) opposé à l'habitacle du véhicule.

2. Dispositif selon la revendication 1, **caractérisé en ce que** la lèvre de recouvrement (31) est formée en matériau plastique souple.

3. Dispositif selon l'une quelconque des revendications 1 ou 2, **caractérisé en ce que** la lèvre de recouvrement (31) s'étend à partir d'un profil de serrage (34).

4. Dispositif selon la revendication 3, **caractérisé en ce que** le profilé de serrage (34) et la lèvre de recouvrement (31) sont formés à partir d'un profilé co-extrudé.

5. Dispositif selon la revendication 3 ou 4, **caractérisé en ce que** le profil de serrage (34) est fixé sur une branche (41) d'une cornière (40).

6. Dispositif selon la revendication 5, **caractérisé en ce que** l'autre branche (42) de la cornière (40) est fixée au rail de fixation (4).
